# EUROPÄISCHE PATENTSCHRIFT

(11) **EP 1 275 540 B1**
(45) Veröffentlichungstag und Bekanntmachung des Hinweises auf die Patenterteilung: **29.03.2006**
(21) Anmeldenummer: 02015006.6
(22) Anmeldetag: 04.07.2002
(51) Int. Cl.: B60J 5/04

(54) **Kraftfahrzeugtür mit Verstärkungsteil im Türmodul und im Türmodul integrierter Brüstung**
Vehicle door with re-enforced carrier panel and integrated belt-line
Porte de véhicule avec panneau renforcé et bordure de vitre intégrée

(30) Priorität: 10.07.2001 DE 10133421
(43) Veröffentlichungstag der Anmeldung: 15.01.2003
(73) Patentinhaber: Bayerische Motoren Werke Aktiengesellschaft, 80809 München (DE)
(72) Erfinder: Reisch, Thomas, 85354 Freising (DE); Strasser, Peter, 84032 Altdorf (DE); Zeilbeck, Bernhard, 80995 München (DE); Denskus, Martin, 81547 München (DE); Schreff, Reinhold, 84103 Postau (DE); Sollinger, Kurt, 82216 Gernlinden (DE); Poltrock, Rüdiger, 80634 München (DE); Albrecht, Matthias, 83607 Holzkirchen (DE)

(56) Entgegenhaltungen:
- WO-A-00/35696
- WO-A-96/28314
- DE-A- 19 937 000
- PATENT ABSTRACTS OF JAPAN vol. 2000, no. 14, 5. März 2001 (2001-03-05) -& JP 2000 318532 A (YAZAKI CORP), 21. November 2000 (2000-11-21)

## Beschreibung

Die Erfindung betrifft eine Kraftfahrzeugtür nach dem Oberbegriff der Anspruchs 1.

Aus der EP 0 811 516 A2 ist eine Kraftfahrzeugtür bekannt, mit einer fahrzeugaußenseitigen Tragstruktur aus einem Türaußenblech und einem Türinnenblech, einem im wesentlichen plattenförmigen Türmodul zur Aufnahme einer Vielzahl mechanischer und elektrischer Komponenten sowie einer Türinnenverkleidung.

Die gattungsgemäße WO 00/35696 offenbart ein Verstärkungsteil, an dem ein Türöffnungsgriff angeordnet ist, an dem keine nennenswerte Kräfte eingeleitet werden. Die DE 199 37 000 A offenbart ein plattenförmiges Türmodul, das innenseitig H-streifenförmige Versteifungsstreben aufweist, an dem ein Türgriff befestigt ist.

Aufgabe der Erfindung ist es, die bekannte Kraftfahrzeugtür weiterzubilden.

Diese Aufgabe wird durch die Merkmale des Anspruchs 1 gelöst.

Kerngedanke gemäß Anspruch 1 ist es, das Türmodul aus Kunststoff auszubilden und partiell durch ein Verstärkungsteil zu verstärken. Erfindungsgemäß ist das Verstärkungsteil unmittelbar benachbart zu dem Bereich der Türinnenverkleidung angeordnet, an dem sich der Türzuziehgriff befindet. Hier werden über den Fahrzeugnutzer in nennenswertem Maße Kräfte in die Kraftfahrzeugtür eingeleitet. Durch die erfindungsgemäße Bauweise kann das Gewicht der Fahrzeugtür verringert werden, da das Verstärkungsteil gezielt im Bereich der größten eingeleiteten Kräfte platziert ist. Durch das in der Regel etwas oberhalb der Längsmittelebene des Türmoduls liegende Verstärkungsteil wird außerdem das Türmodul als Ganzes deutlich versteift.

Das Verstärkungsteil ist streifenförmig und erstreckt sich über die gesamte Länge des Türmoduls. Es ist an seinem in Fahrtrichtung vorderen und hinteren Endabschnitt unmittelbar mit der Tragstruktur der Kraftfahrzeugtür verbunden. Hierdurch ergibt sich eine formsteife Anbindung des Türzuziehgriffes über das Verstärkungsteil an die Tragstruktur der Tür. Grundsätzlich können auch mehrere Verstärkungsteile - in Richtung der Fahrzeughochachse betrachtet - übereinander angeordnet sein, wenngleich in den meisten Anwendungsfällen ein einzelnes Verstärkungsteil mit entsprechend dimensionierter Breite hinsichtlich Gewicht und Herstellkosten vorteilhafter sein dürfte.

Bei einem im Spritzgussverfahren hergestellten Türmodul kann das Verstärkungsteil in einem Arbeitsgang mit in die Spritzgussform eingelegt und integral mit dem Türmodul hergestellt werden. Alternativ ist es grundsätzlich auch möglich, Türmodul und Verstärkungsteil lösbar miteinander zu verbinden.

In weiterer Ausgestaltung der Erfindung wird das Verstärkungsteil durch eine in den mittleren Bereich der Tür eingesetzte, in Fahrzeuglängsrichtung verlaufende Türinnenverkleidung abgedeckt. Diese auch als "Türspiegel" bezeichnete Türinnenverkleidung trägt unter anderem den Türzuziehgriff und kann dazu verwendet werden, bei geringem Logistikaufwand lediglich durch Variation von Farbe, Material und Oberfläche des Türspiegels eine große Vielfalt unterschiedlich gestalteter Kraftfahrzeugtüren herzustellen.

Unterhalb des Türspiegels ist beispielsweise eine Kartentasche angeordnet, die in einer Ausführungsform der Erfindung zweigeteilt ausgebildet ist, wie an sich bereits aus der JP 2000-318532 A1 bekannt. Hierbei ist ein innenliegender Teil der Kartentasche einstückig an das Türmodul angeformt, während die Kartentasche nach außen durch eine Türinnenverkleidung unterhalb des Türspiegels begrenzt wird.

Das Verstärkungsteil besteht bevorzugt aus Metall (z. B. Stahl- oder Aluminiumblech), faserverstärktem Kunststoff oder ist als Verbundbauteil aus mehreren Werkstoffen ausgeführt. Als Werkstoffe kommen beispielsweise glasmattenverstärkte Thermoplaste (GMT; PA-GF), Glasmatten oder Gelege mit Polyesterharzmatrix (SMC) und langfaserverstärkte Kunststoffe (ca. 3 bis ca. 26 mm Glasfaserlänge in der Matrix; PP-GF) zum Einsatz.

Das Türmodul besteht beispielsweise aus PP, ABS, ABS/PC, PA, PPE oder aus einem der oben in Zusammenhang mit dem Verstärkungsteil genannten Werkstoffe (z. B. langfaserverstärktem Kunststoff). Grundsätzlich weist das Verstärkungsteil eine höhere Festigkeit und Steifigkeit auf als das restliche Türmodul.

Wie bereits oben ausgeführt, werden Türmodul und Verstärkungsteil bevorzugt gemeinsam hergestellt, zum Beispiel durch Hybrid-Spritzguss.

Bevorzugt ist am Türmodul ein in Höhe der Brüstungslinie des Fahrzeugs verlaufender Brüstungsabschnitt angeformt, der einen Teil der Türinnenverkleidung bildet. Durch diese erweiterte Funktion des Türmoduls wird die Anzahl der Bauteile der Kraftfahrzeugtür reduziert, bei gleichzeitig vereinfachter Herstellung und geringeren Herstellkosten.

Hierbei kann durch Auswahl eines geeigneten Kunststoffes für das Türmodul der Brüstungsabschnitt so gestaltet werden, dass die Oberfläche des Brüstungsabschnitts unmittelbar Sichtfläche im Fahrzeuginnenraum ist, mit Vorteilen hinsichtlich des Herstellaufwandes und der Herstellkosten. Andererseits ergibt sich durch nachträgliches Lackieren oder anderweitiges Kaschieren des Brüstungsabschnittes eine größere Gestaltungsfreiheit und die Möglichkeit, eine hochwertiger anmutende Oberfläche zu schaffen.

Bevorzugt sind Türmodul und Brüstungsabschnitt einstückig geformt. Der Brüstungsabschnitt kann jedoch auch in einem separaten Arbeitsgang angeformt werden, zum Beispiel durch Anspritzen oder Angießen eines zum übrigen Türmodul unterschiedlichen Kunststoffmaterials.

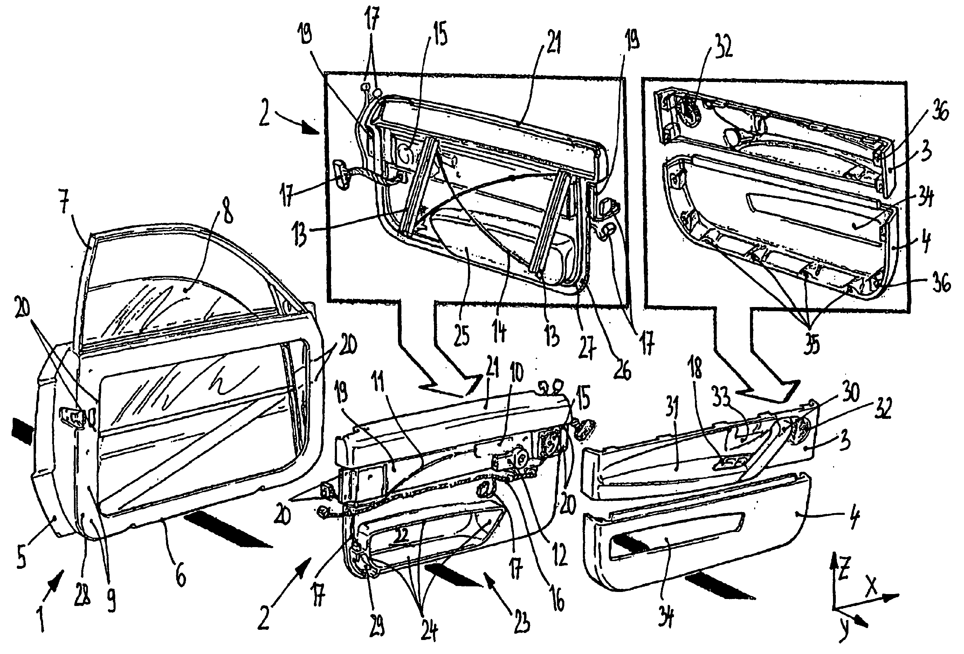

Mögliche Ausführungsbeispiele der Erfindung sind in der Zeichnung dargestellt und werden nachstehend näher erläutert. Die einzige Figur zeigt eine Ausführungsform einer erfindungsgemäßen Kraftfahrzeugtür in Explosionsdarstellung.

Eine Kraftfahrzeugtür weist eine fahrzeugaußenseitige Tragstruktur 1, ein Türmodul 2, ein mittleres Türinnenverkleidungsteil 3 und ein unteres Türinnenverkleidungsteil 4 auf. Die Tragstruktur 1 wird von einem Türaußenblech 5 sowie einem Türinnenblech 6 gebildet. Nach oben hin schließt sich ein Fensterrahmen 7 an. In die Tragstruktur 1 ist eine höhenverlagerbare Seitenscheibe 8 eingesetzt.

Das Türmodul 2 besteht aus einer auf das Türinnenblech 6 aufsetzbaren, im Wesentlichen plattenförmigen Struktur aus einem Kunststoffmaterial, die über eine Mehrzahl von Verschraubungspunkten 9 mit dem Türinnenblech 6 verbunden ist. Das Türmodul 2 ist dreidimensional geformt und weist neben seiner hauptsächlichen Erstreckung in der Ebene der Fahrzeuglängsrichtung X und der Fahrzeughochachse Z auch Abschnitte in Fahrzeugquerrichtung Y auf, wie anschaulich aus der Darstellung der Vorder- und der Rückseite des Türmoduls 2 hervorgeht. Das Türmodul 2 ist bevorzugt einstückig aus dem Kunststoffmaterial hergestellt.

Das Türmodul 2 nimmt eine Reihe von mechanischen und elektrischen Komponenten auf: Einen Türöffnungsmechanismus 10 mit einem Bowdenzug 11, einen Fensterhebermotor 12 mit auf der Rückseite des Türmoduls 2 angeordneten Schienen 13 für die Führung der Seitenscheibe 8 sowie Antriebskabeln 14, einen Lautsprecher 15 sowie einen Kabelbaum 16, der die elektrischen Komponenten miteinander verbindet und Stecker 17 aufweist, zur Verbindung mit der nicht dargestellten Karosserie, einem Türaußenspiegel, einem Türschloss sowie einem Bedienschalter 18 für die Fensterheber und einer nicht näher dargestellten Beleuchtungseinrichtung 29.

Am Türmodul 2 ist ein Verstärkungsteil 19 vorgesehen, das sich etwa auf Höhe eines Türzuziehgriffes 30 befindet und sich in Fahrzeuglängsrichtung X über die gesamte Länge des Türmoduls 2 erstreckt. Das Verstärkungsteil 19 ist als separates Bauteil ausgeführt und wird über Verschraubungsstellen 20 mit dem Türinnenblech 6 verbunden. Das Verstärkungsteil 19 überdeckt das Türmodul 2 und ist form- und kraftschlüssig mit dem Türmodul 2 verbunden. Hierzu ragt es am vorderen und hinteren Randabschnitt des Türmoduls 2 über dieses hinaus, wie anschaulich aus der linken eingerahmten Darstellung der Rückseite des Türmoduls 2 in der Figur hervorgeht. Verstärkungsteil 19 und Türmodul 2 sind durch bekannte Fügeverfahren, wie zum Beispiel Verklebung oder Ultraschallschweißung, miteinander verbunden. Auch der Bereich des Türzuziehgriffs 30 ist mit dem Verstärkungsteil 19 verbunden, beispielsweise durch Verschraubung. Durch diesen Aufbau wird die über den Türzuziehgriff 30 eingeleitete Kraft unmittelbar in die Tragstruktur 1 der Kraftfahrzeugtür eingeleitet und gleichzeitig eine Versteifung des gesamten Türmoduls 2 erreicht. Alternativ kann das Verstärkungsteil 19 auch in einem Herstellgang in das Türmodul 2 eingebettet werden.

Oberhalb des Verstärkungsteils 19 ist an das Türmodul 2 ein Brüstungsabschnitt 21 einstückig angeformt. Der Brüstungsabschnitt 21 bildet eine dem Fahrzeuginnenraum zugewandte Sichtfläche und ist beispielsweise mit einer eine Ledemarbung nachbildenden Oberfläche versehen. Hierdurch ist im Brüstungsbereich kein separates Türverkleidungsteil mehr erforderlich. Abweichend von der zeichnerischen Darstellung kann sich das Verstärkungsteil 19 auch nach oben hin bis unter den Brüstungsabschnitt 21 erstrecken, um das Türmodul 2 weiter zu versteifen und um einen Teil der bei einem Fahrzeugcrash auftretenden Kräfte auf Höhe der Brüstungslinie besser aufnehmen zu können. Beispielsweise weist das Verstärkungsteil 19 hierbei in seinem oberen Bereich eine in Richtung des Fahrzeuginnenraumes weisende etwa rechtwinklige Abwinklung auf.

Unterhalb des Verstärkungsteils 19 ist am Türmodul 2 einstückig ein von Wänden 24 begrenzter Aufnahmeraum 22 für eine in ihrer Gesamtheit mit 23 bezeichnete Kartentasche angeordnet. Der Aufnahmeraum 22 ist zum Fahrzeuginnenraum hin offen. An der Rückseite des Türmoduls 2 ist der Aufnahmeraum 22 durch eine geschlossene Ausbuchtung 25 begrenzt.

Die Rückseite des Türmoduls 2 ist an ihren Randbereichen 26 zur Anordnung einer Dichtung 27 ausgebildet, die mit den Anschraubbereichen 28 des Türinnenbleches 6 zusammenwirkt. Hierdurch wird der so genannte Nassraum der Kraftfahrzeugtür an der Rückseite des Türmoduls 2 gegenüber dem Trockenraum an der Vorderseite des Türmoduls 2 abgedichtet. Die Durchtritte des Kabelbaums 16 sind ebenso abgedichtet wie die entsprechenden Durchbrüche für den Antrieb durch den Fensterhebermotor 12 und den Türöffnungsmechanismus 10. An der Innenseite des Türmoduls 2 können die Komponenten in einfacher und kostengünstigen Weise im Trockenraum angeordnet werden.

Zum Fahrzeuginnenraum hin wird das Türmodul durch die beiden Türinnenverkleidungsteile 3 und 4 abgedeckt, die zusammen mit dem einstückig an das Türmodul 2 angeformten Brüstungsabschnitt 21 die gesamte Türinnenverkleidung bilden. Das mittlere Türinnenverkleidungsteil 3 trägt hierbei einen Türzuziehgriff 30, eine Armauflage 31, ein Lautsprechergitter 32 sowie einen Türöffnungshebel 33. Am unteren Türinnenverkleidungsteil 4 ist ein Schlitz 34 für das Kartenfach 23 vorgesehen. Beide Türinnenverkleidungsteile 3 und 4 weisen auf ihrer Rückseite eine Mehrzahl von Löchern 35 und 36 auf, mit denen sie am Türmodul 2 durch Verschraubung und/oder Verclipsung befestigt werden können. Über die am Türinnenverkleidungsteil 4 untenliegenden Schraublöcher 35 (zusätzlich zu den oben beschriebenen Verschraubungsstellen 20) wird das Türmodul 2 starr an die Tragstruktur 1 angebunden.

Bei erfindungsgemäßen Kraftfahrzeugtüren mit einheitlichem Türmodul 2, an das der Brüstungsabschnitt 21 angeformt ist, wird eine hohe Bauteilintegration erreicht, wobei die Variantenvielfalt über die beiden individuell zu gestaltenden Türinnenverkleidungsteile 3 und 4 hergestellt wird. Insbesondere der Türspiegel 3 eignet sich hierbei zur Differenzierung. Das Türmodul 2 kann komplett vormontiert werden. Die Türinnenverkleidungsteile 3 und 4 können am Montageband des Fahrzeugherstellers entsprechend der Kundenbestellung individuell komplettiert werden. Alternativ kann das untere Türinnenverkleidungsteil 4 bereits am Türmodul 2 vormontiert angeliefert werden, so dass die herstellerseitige Differenzierung nur über den Türspiegel 3 erfolgt. Durch das beschriebene Konzept ergibt sich ein geringer Logistikaufwand am Montageband, bei gleichzeitig hoher möglicher Variantenanzahl. Designänderungen an Fahrzeugen der laufenden Serie können in einfacher Weise durch Neugestaltung der Türinnenverkleidungsteile 3 und/oder 4 erfolgen. Auch sind in einfacher Weise im Weg der Nachrüstung individuelle Änderungen durch den Fahrzeugnutzer möglich.

Durch das Vorsehen eines Türmoduls 2 mit separaten Türinnenverkleidungsteilen 3 und 4 wird gegenüber solchen Ausführungen von Kraftfahrzeugtüren, bei denen Türmodul und Türinnenverkleidung zu einem einzigen Bauteil zusammengefasst sind (zum Beispiel DE 32 09 052 A1), eine höhere Oberflächenqualität der Türinnenverkleidung sowie eine einfache Möglichkeit zur Erzeugung von Varianten erreicht. Auch ist bei der erfindungsgemäßen Kraftfahrzeugtür die Einbringung des Verstärkungsteils 19 mit großer Prozesssicherheit zu realisieren.

Durch die Gestaltung des Türmoduls 2 ergibt sich eine große Öffnung in der Tragstruktur 1 der Fahrzeugtür, mit guter Zugänglichkeit in der Erstmontage und im Service. Das Türmodul 2 kann komplett vormontiert werden. Die Integration des Brüstungsabschnittes 21 vereinfacht den Montageablauf weiter. Durch die Gestaltung des Türmoduls 2 in Kunststoff mit einer gezielten, partiellen Verstärkung ergibt sich ein geringes Gewicht der Fahrzeugtür. Durch das Verstärkungsteil 19 erfolgt eine optimierte Krafteinleitung in die Tragstruktur 1 vor allem beim Zuziehen der Tür. Auch für den Fall, dass die Kraftfahrzeugtür während der Erstmontage oder im Reparaturfall am Türzuziehgriff 30 getragen wird, erweist sich der erfindungsgemäße Aufbau als ausreichend steif.

## Patentansprüche

1. Kraftfahrzeugtür, mit einer fahrzeugaußenseitigen Tragstruktur (1), einem sich über einen wesentlichen Teil der Kraftfahrzeugtür erstreckenden Türmodul (2) zur Aufnahme mechanischer und/oder elektrischer Komponenten und wenigstens einem fahrzeuginnenseitigen Verkleidungsteil (3, 4), wobei das Türmodul (2) aus einem Kunststoffmaterial besteht,
**dadurch gekennzeichnet, dass** das Türmodul (2) wenigstens ein etwa auf Höhe eines Türzuziehgriffes (30) verlaufendes, sich in Fahrzeuglängsrichtung (X) im wesentlichen über die gesamte Länge der Fahrzeugtür erstreckendes, streifenförmiges Verstärkungsteil (19) aufweist, das direkt mit der Tragstruktur (1) verbunden ist, wobei der Bereich des Türzuziehgriffs (30) mit dem Verstärkungsteil (19) derart verbunden ist, dass die über den Türzuziehgriff (30) eingeleitete Kraft unmittelbar in die Tragstruktur (1) der Kraftfahrzeugtür eingeleitet wird.

2. Kraftfahrzeugtür nach Anspruch 1,
**dadurch gekennzeichnet, dass** das Verstärkungsteil (19) in das Türmodul (2) eingeformt ist.

3. Kraftfahrzeugtür nach Anspruch 1,
**dadurch gekennzeichnet, dass** das Verstärkungsteil (19) lösbar mit dem Türmodul (2) verbunden ist.

4. Kraftfahrzeugtür nach einem der vorangegangenen Ansprüche,
**dadurch gekennzeichnet, dass** im Bereich des Verstärkungsteils (19) eine sich in Fahrzeuglängsrichtung (X) erstreckende mittlere Türinnenverkleidung (3) vorgesehen ist, die zumindest einen Türzuziehgriff (30) trägt.

5. Kraftfahrzeugtür nach einem der vorangegangenen Ansprüche,
**dadurch gekennzeichnet, dass** am Türmodul (2) unterhalb des Verstärkungsteils (19) eine Kartentasche (23) angeordnet ist.

6. Kraftfahrzeugtür nach Anspruch 5,
**dadurch gekennzeichnet, dass** am Türmodul (2) Wandungen (24) der Kartentasche (23) angeformt sind und eine separate untere Türinnenverkleidung (4) vorgesehen ist, die sich an die mittlere Türinnenverkleidung (3) anschließt und eine Öffnung (28) zur Kartentasche (23) aufweist.

7. Kraftfahrzeugtür nach einem der vorgenannten Ansprüche,
**dadurch gekennzeichnet, dass** am oberen Endabschnitt des Türmoduls (2) ein in Fahrzeuglängsrichtung (X) verlaufender, dem Fahrzeuginnenraum zugewandter Brüstungsabschnitt (21) angeformt ist.

8. Kraftfahrzeugtür nach einem der Ansprüche 1 bis 7,
**dadurch gekennzeichnet, dass** der Brüstungsabschnitt (21) oberhalb des Verstärkungsteils (19) verläuft.

9. Kraftfahrzeugtür nach einem der Ansprüche 1 bis 8,
**dadurch gekennzeichnet, dass** der Brüstungsabschnitt (21) das Verstärkungsteil (19) zumindest teilweise überdeckt.

## Claims

1. A vehicle door comprising a bearing structure (1) on the outside of the door, a door module (2) extending over a substantial part of the door and for holding mechanical and/or electric components, and at least one inside covering part (3, 4), wherein the door module (2) is formed of a plastics material,
**characterised in that** the door module (2) has at least one reinforcing part (19) in the form of a strip extending substantially along the entire length of the door in the longitudinal direction (X) of the vehicle and approximately at the same level as a handle (30) for pulling the door shut, the reinforcing part being directly connected to the bearing structure (1), wherein the region round the door handle (30) is so connected to the reinforcing part (19) that force exerted via the door handle (30) is transmitted directly into the bearing structure (1) of the door.

2. A vehicle door according to claim 1, **characterised in that** the reinforcing part (19) is integrally formed in the door module (2).

3. A vehicle door according to claim 1, **characterised in that** the reinforcing part (19) is detachably connected to the door module (2).

4. A door according to any of the preceding claims, **characterised in that** a central inside door covering (3) extends in the longitudinal direction (X) of the vehicle in the neighbourhood of the reinforcing part (19) and bears at least one door handle (30).

5. A door according to any of the preceding claims, **characterised in that** a map holder (23) is disposed on the door module (2) underneath the reinforcing part (19).

6. A door according to claim 5, **characterised in that** walls (24) of the map holder (23) are integrally formed on the door module (2) and a separate bottom inside door covering (4) is provided and adjoins the middle inside door covering (3) and has an opening (28) towards the map holder (23).

7. A door according to any of the preceding claims, **characterised in that** a parapet portion (21) extending in the longitudinal direction (X) of the vehicle and facing the vehicle interior is integrally formed on the top end portion of the door module (2).

8. A door according to any of claims 1 to 7, **characterised in that** the parapet portion (21) extends above the reinforcing part (19).

9. A door according to any of claims 1 to 8, **characterised in that** the parapet portion (21) at least partly covers the reinforcing part (19).

## Revendications

1. Portière de véhicule automobile, comprenant une structure porteuse située du côté extérieur du véhicule (1), un module de portière (2) s'étendant sur une majeure partie de la portière pour la réception de composants mécaniques et/ou électriques, et au moins une partie d'habillage située sur le côté intérieur du véhicule (3, 4), le module de portière (2) étant en matière plastique,
**caractérisée en ce que**
le module de portière (2) présente au moins une partie de renfort (19) en forme de bande, s'étendant dans la direction longitudinale (x) du véhicule, pour l'essentiel sur toute la longueur de la portière, approximativement à hauteur d'une poignée de fermeture 30, et directement reliée à la structure porteuse (1), la zone de la poignée de fermeture de portière (30) étant reliée à la partie de renfort (19) de sorte que la force exercée par la poignée de fermeture (30) est appliquée directement dans la structure porteuse (1) de la portière.

2. Portière de véhicule automobile selon la revendication 1,
**caractérisée en ce que**
la partie de renfort (19) est intégrée au module de portière (2).

3. Portière de véhicule automobile selon la revendication 1,
**caractérisée en ce que**
la partie de renfort (19) est reliée de façon amovible au module de portière (2).

4. Portière de véhicule automobile selon l'une des revendications précédentes,
**caractérisée en ce que**
dans la zone de la partie de renfort (19), on prévoit un habillage intérieur de portière médian (3) s'étendant dans la direction longitudinale (X) du véhicule, qui porte au moins une poignée de fermeture (30).

5. Portière de véhicule automobile selon l'une des revendications précédentes,
**caractérisée en ce qu'**
au niveau du module de portière (2), en dessous de la partie de renfort (19), est disposé un vide-poches (23).

6. Portière de véhicule automobile selon la revendication 5,
**caractérisée en ce qu'**
au niveau du module de portière (2) sont formées des parois (24) du vide-poches (23) et un habillage intérieur de portière inférieur (4) se rattache à l'habillage intérieur de portière médian (3) et présente une ouverture (28) vers le vide-poches (23).

7. Portière de véhicule automobile selon l'une des revendications précédentes,
**caractérisée en ce qu'**
au niveau de la section d'extrémité supérieure du module de portière (2) est formée une section de bordure de vitre (21) s'étendant dans la direction longitudinale (X) du véhicule et tournée vers l'habitacle du véhicule.

8. Portière de véhicule automobile selon les revendications 1 à 7,
**caractérisée en ce que**
la section de bordure de vitre (21) s'étend au-dessus de la partie de renfort (19).

9. Portière de véhicule automobile selon les revendications 1 à 8,
**caractérisée en ce que**
la section de bordure de vitre (21) recouvre au moins partiellement la partie de renfort (19).
